# EUROPÄISCHE PATENTSCHRIFT

(11) **EP 0 832 815 B1**
(45) Veröffentlichungstag und Bekanntmachung des Hinweises auf die Patenterteilung: **15.01.2003**
(21) Anmeldenummer: 97116628.5
(22) Anmeldetag: 24.09.1997
(51) Int. Cl.: B62M 3/00, B62M 1/02, B62K 19/34

(54) **Tretlageranordnung**
Bottom bracket bearing arrangement
Palier de pédalier

(30) Priorität: 27.09.1996 DE 19640030
(43) Veröffentlichungstag der Anmeldung: 01.04.1998
(73) Patentinhaber: Joachim Hoffmann, 58511 Lüdenscheid (DE)
(72) Erfinder: Hoffmann, Joachim, 58089 Hagen (DE); Henkel, Stefan, 58769 Nachrodt-Wiblingwerde (DE)
(74) Vertreter: Draudt, Axel Hermann Christian, Dipl.-Ing.

(56) Entgegenhaltungen:
- DE-A- 3 344 690
- DE-A- 3 407 120
- DE-U- 9 210 135
- DE-U- 29 519 089

## Beschreibung

Die vorliegende Erfindung betrifft eine Tretlageranordnung nach Oberbegriff von Anspruch 1.

Derartige Tretlageranordnungen sind z.B. bekannt aus DE-U-92 10 135. Prinzipiell handelt es sich bei dieser Tretlageranordnung um ein sogenanntes Kassettentretlager. Wesentlich hierfür ist die Tatsache, daß zusätzlich zu dem Tretlagergehäuse, welches mit dem Fahrradrahmen verbunden ist, eine Kassettenhülse vorgesehen ist, welche das Tretlager im Tretlagergehäuse allseitig umschließt.

Hiervon zu unterscheiden sind die Tretlageranordnungen, bei welchen die Lageraußenringe in die Befestigungsringe eingearbeitet sind, mit denen das Tretlager am Tretlagergehäuse des Fahrradrahmens befestigt wird.

Bei einem weiteren, aus DE-U-89 15 623 bekannten Tretlager werden die Lagerlaufbahnen sowohl an der Tretlagerachse als auch an der Kassettenhülse angedreht. Danach wird die Tretlageranordnung mitsamt der Wälzkörper vormontiert und steht zum Einbau in das Tretlagergehäuse zur Verfügung.

Zu diesem Zweck ist ein Ende der Kassettenhülse mit einem Einschraubgewinde für das Tretlagergehäuse des Fahrradrahmens versehen. Das andere Ende wird von einem Hülsenzentrierring umgeben, der dann ebenfalls in das Tretlagergehäuse eingeschraubt wird.

Obwohl sich das bekannte Kassettentretlager in der Praxis hervorragend bewährt hat, ist es Aufgabe der vorliegenden Erfindung, das bekannte Tretlager so zu verbessern, daß unter Aufrechterhaltung der Zuverlässigkeit der konstruktive Aufwand verringert und trotzdem eine vereinfachte Montage des Kassettentretlagers ermöglicht wird.

Diese Aufgabe wird gelöst mit den Merkmalen des Anspruchs 1.

Aus der Erfindung ergibt sich der Vorteil, daß zur Montage die Tretlagerachse einfach von einer Seite in die Kassettenhülse eingesteckt werden kann und daß danach der Hülsenzentrierring der anderen Seite zusammen mit dem dort befindlichen Wälzlager zentrierend auf die Kassettenhülse aufgeschoben werden kann, während gleichzeitig das dortige Wälzlager axial montiert wird.

Dieser Vorteil wird dadurch erreicht, daß der Hülsenzentrierring nunmehr auch die Funktion übernimmt, den Außenring des dortigen Wälzlagers aufzunehmen.

Dem Hülsenzentrierring kommt demnach bei der vorliegenden Erfindung eine Doppelfunktion zu. Er dient einerseits der zentrierenden Aufnahme der Kassettenhülse und darüber hinaus bietet er die Einschraubmöglichkeit für das so vormontierte Tretlager am Tretlagergehäuse des Fahrradrahmens.

Zu diesem Zweck weist der Hülsenzentrierring eine Innenbohrung auf, die dem Außendurchmesser der Kassettenhülse am freien Ende entspricht, während gleichzeitig am Boden der In-nenbohrung der Außenring der Lagerlaufbahn des dort befindlichen Wälzlagers vorgesehen ist.

Zusätzlich ist am Außenumfang des Hülsenzentrierrings das Einschraubgewinde für das Tretlagergehäuse des Fahrradrahmens vorgesehen.

Es kommt also darauf an, daß am Boden des Zentriersitzes dieses Hülsenzentrierringes eine weitere Ring-Ausnehmung vorgesehen ist, die entweder selbst als oder der Aufnahme des Lageraußenring(s) des betreffenden Wälzlagers dient.

Zweckmäßigerweise ist der Bohrungsdurchmesser des Zentriersitzes für die Kassettenhülse am Befestigungsring größer als der Bohrungsdurchmesser zur Aufnahme des betreffenden Lageraußenrings, so daß bei der Montage des Kassettentretlagers dieser Befestigungsring einfach auf das noch nicht geschlossene Ende der Kassettenhülse aufgesteckt werden kann.

Zur Befestigung dieses Befestigungsringes an der Kassettenhülse genügt es, eine Verbindungsfuge mit Übergangspassung vorzusehen. Gleichwohl kann der Befestigungsring mit der Kassettenhülse über ein gemeinsames Gewinde verbunden sein.

Zur weiteren Vereinfachung der Montage kann zusätzlich vorgesehen werden, den Lageraußenring der anderen Tretlagerseite in einer Lagerhülse vorzusehen, die endseitig so umgebördelt ist, daß sich auf ihrem Innenumfang ein Lagersitz ergibt. Die Lagerhülse wird dann in das freie Ende der Kassettenhülse eingesteckt und bietet somit einen verschleißfesten stählernen Lagersitz innerhalb der Kassettenhülse, die vorzugsweise an diesem Ende so umgebördelt ist, daß die stählerne Lagerhülse axial festgehalten wird.

Diese Weiterbildung bietet insbesondere den Vorteil, daß im Gegensatz zum Material der Lagerhülse die Kassettenhülse aus Kunststoff bestehen kann.

Zusätzlich kann vorgesehen sein, diese prinzipielle Lehre auch auf der zweiten Tretlagerseite anzuwenden. Dort wird dann vorgesehen, daß der Hülsenzentrierring von einem Kunststoffteil und daß der Lageraußenring von einem Stahlring gebildet wird, der in dem Kunststoffteil sitzt, vorzugsweise von Kunststoff umspritzt ist.

Auf diese Weise gelangt man zu einem Kassettentretlager von geringem Gewicht, welches bei vereinfachter Montage zusätzlich hohe Verschleißfestigkeit der Wälzlager bietet.

Berücksichtigt man ferner, daß die Tretlagermontage einen gewissen Axialausgleich verlangt, der einerseits auf unterschiedliche Tretlagerbreiten und andererseits innerhalb der Tretlagerbreiten auf unterschiedliche Toleranzen zurückzuführen ist, wird zusätzlich vorgeschlagen, den Hülsenzentrierring der zweiten Tretlagerseite gegenüber dem dort liegenden Ende der Kassettenhülse mit einem gewissen Axialspiel vorzusehen. Innerhalb des Axialspiels kann dann das Kassettentretlager ohne weiteres an die vorkommenden Breiten des Tretlagergehäuses angepaßt werden.

Um weiterhin zu vereinfachtem Montageaufwand bei geringen Kosten zu kommen, sollen die inneren Lagerlaufbahnen der Wälzkörperlager von Schultern der Tretlagerachse gebildet werden, die durch Stauchen angeformt sind.

Die hiermit erzielten Fertigungsgenauigkeiten sind für die meisten üblichen Tretlager völlig ausreichend. Das Anformen der Lagerschultern kann praktisch in einem Arbeitsgang mit dem Anformen der Kurbelenden der Tretlagerachse geschehen.

Obwohl die Erfindung realisiert werden kann für Wälzlager unterschiedlichster Typen z.B. Zylinderlager, Kegelrollenlager, bietet es Vorteile, Schulterkugellager vorzusehen, weil dann nicht nur alle radialen sondern darüber hinaus auch axiale Kräfte in gewissem Umfang aufgenommen werden können.

Im folgenden wird die Erfindung anhand von Ausführungsbeispielen noch näher erläutert. Es zeigen:
- Fig.1: ein erstes Ausführungsbeispiel der Erfingung, und
- Fig.2: ein weiteres Ausführungsbeispiel der Erfindung.

Sofern im folgenden nichts anderes gesagt ist, gilt die folgende Beschreibung stets für alle Figuren.

Die Figuren zeigen eine Tretlageranordnung 1, wie sie in einem Tretlagergehäuse 2 eines Fahrradrahmens anzuordnen wäre.

Die Befestigung der Tretlageranordnung 1 am Tretlagergehäuse 2 erfolgt über endseitig angeordnete Hülsenzentrierringe 14,15 die auf ihrem Außenumfang mit einem ersten bzw. zweiten Einschraubgewinde 3 bzw. 4 versehen sind.

Kernstück derartiger Tretlageranordnung 1 ist die Tretlagerachse 5, welche endseitig mit inneren Lagerlaufbahnen 6 bzw. 7 für Wälzkörperlager 10 bzw. 11 versehen ist. Die Lageraußenringe 8 bzw.9 werden über die vom Tretlagergehäuse 2 unabhängige Tretlagerkassette 12 verbunden.

Die Tretlagerkassette 12 weist als wesentlichen Bestandteil die Kassettenhülse 13 auf, welche die gesamte Tretlageranordnung hülsenartig umschließt und nach außen abdichtet.

Die Kassettenhülse 13 wird von endseitig aufgesteckten Hülsenzentrierringen 14 bzw. 15 umschlossen. Zu diesem Zweck weisen die Hülsenzentrierringe 14,15 Innendurchmesser mit einen Paßsitz auf, der an den jeweiligen Außendurchmesser der Kassettenhülse 13 angepaßt ist.

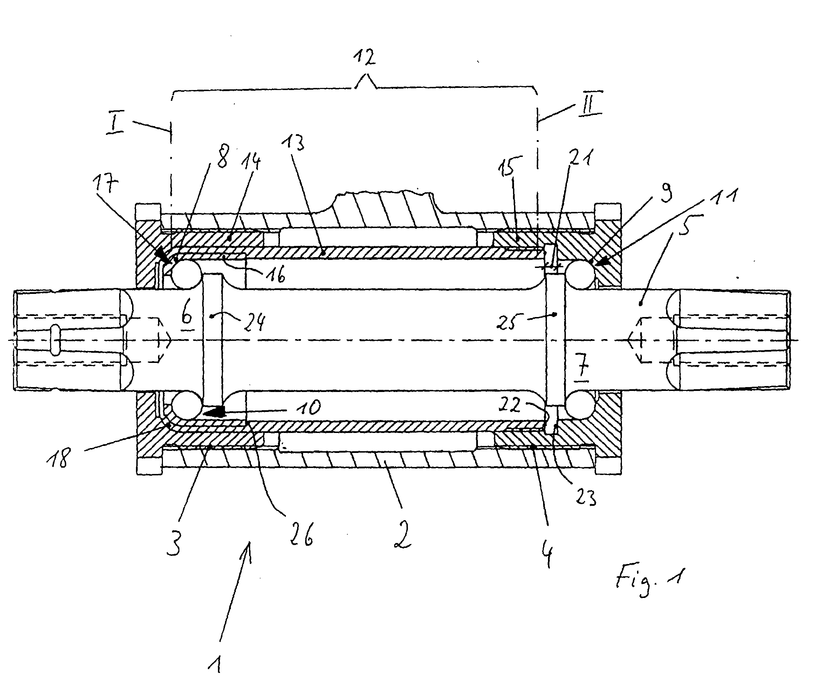

Zusätzlich zeigt Fig.1, daß die Verbindung zwischen dem zweiten Hülsenzentrierring 15 und der Kassettenhülse 13 über eine Gewindepaarung vorgesehen werden kann.

Wesentlich ist nun, daß beide Hülsenzentrierringe 14 bzw. 15 innen die Kassettenhülse 13 aufnehmen während sie außen über entsprechende Gewindepaarungen mit dem Tretlagergehäuse 2 verbunden sind.

Es kommt demnach beiden Hülsenzentrierringen 14 und 15 eine Doppelfunktion zu. Während sie in ihrem Innern der spielfreien Aufnahme der Kassettenhülse 13 dienen, bieten sie über das Außengewinde eine geeignete Verbindung zum Tretlagergehäuse 2.

Zusätzlich kommt aber dem zweiten Hülsenzentrierring noch eine dritte Funktion zu. Dieser zweite Hülsenzentrierring 15 dient nämlich zusätzlich der Ausbildung des Lageraussenrings 9 der Wälzkörperlagerung auf dieser Tretlagerseite, so daß der zweite Hülsenzentrierring 15 einfach über das freie Ende der Kassettenhülse gesteckt werden kann, während gleichzeitig die Wälzkörperlagerung wirksam wird.

Zu diesem Zweck ist der axial zum Inneren des Tretlagers zeigende Innendurchmesser des zweiten Lagerhülsenzentrierrings 15 mindestens so groß, wie der äußere Hüllkreis der Wälzkörper.

Darüber hinaus ist beiden Ausführungsbeispielen gemeinsam, daß der Lageraußenring 8 der ersten Tretlagerseite I außenendig in einer dort umgebördelten Lagerhülse 16 sitzt, die in der Kassettenhülse 13 der Tretlagerkassette eingesteckt sitzt. Auf diese Weise lassen sich auch materialtechnisch die unterschiedlichen Anforderungen an die Kassettenhülse 13 einerseits und an den Lageraußenring 8 andererseits trennen.

Der Lageraußenring 8 ist zweckmäßigerweise aus Stahl gefertigt. Die Kassettenhülse 13 kann aus Kunststoff bestehen.

Zur axialen Befestigung der Lagerhülse 16 kann das dort befindliche Ende der Kassettenhülse 13 noch ein Stück um den umgebördelten Bereich der Lagerhülse 16 herum gebördelt sein, um diese axial gegen Herausfallen zu halten.

Durch die sich eng anschmiegende Innenkontur des ersten Hülsenzentrierrings 14 an die Kassettenhülse 13 insbesondere in ihrem umgebördelten Endbereich 18 wird das äußere Ende 17 der Lagerhülse 16 mitsamt dem umgebördelten Ende 18 der Kassettenhülse 13 sauber und spielfrei gehalten, so daß auch unter den auftretenden Lagerlasten das Wälzkörperlager spielfrei betrieben werden kann.

Die zweite Tretlagerseite ist bei den unterschiedlichen Ausführungsbeispielen unterschiedlich ausgebildet.

Hierzu zeigt Fig.1, daß der zweite Außenlagerring 9 materialeinheitlich in den zweiten Hülsenzentrierring 15 integriert ist. Der zweite Hülsenzentrierring kann demnach aus Stahl gefertigt sein.

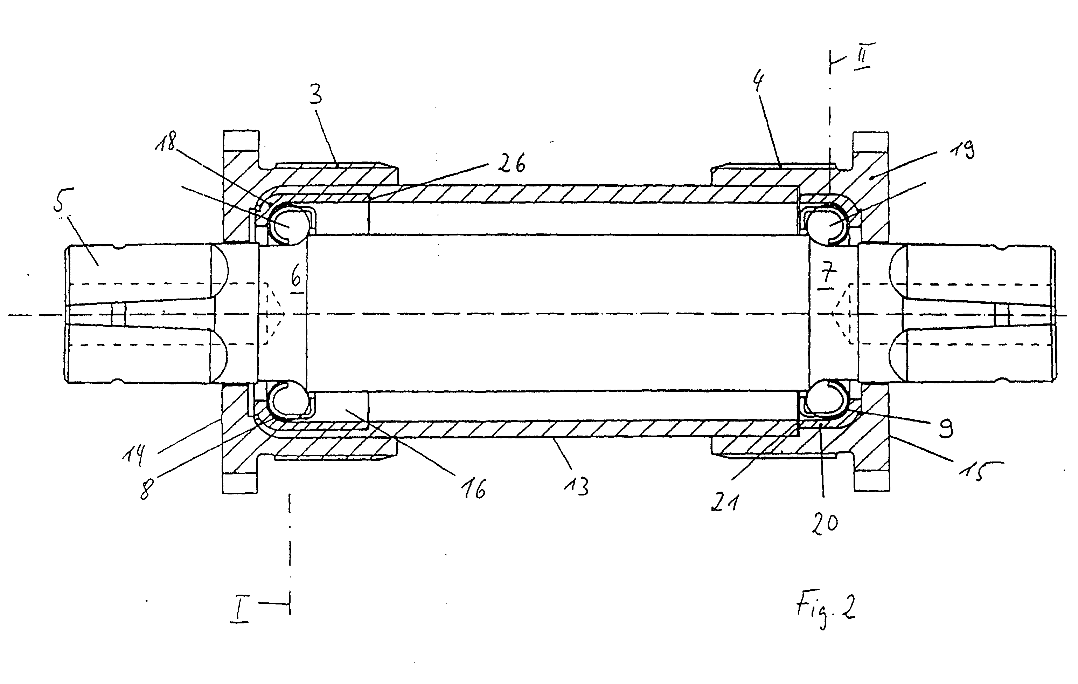

Eine hiervon abweichende Lehre ergibt sich aus Fig.2, dort ist der Hülsenzentrierring 15 aufgebaut aus einem äußeren Kunststoffteil 19 und einem darin sitzenden Lageraußenring 9, der hier als Stahlring 20 ausgebildet ist. Der Stahlring kann in das Kunststoffteil 19 eingeklebt oder eingeklemmt sein. Vorteilhafterweise wird der Stahlring 20 von dem Kunststoffteil 19 umspritzt.

Beiden gezeigten Ausführungsbeispielen ist darüber hinaus zu entnehmen, daß der zweite Hülsenzentrierring 15 im Bereich der fertigungstechnisch vorkommenden Axialabstände der Wälzkörperlager 10 bzw. 11 im montierten Zustand mit Axialspiel 21 auf der Kassettenhülse 13 der Tretlagerkassette montierbar ist.

Demnach wird der Montageabstand der beiden Hülsenzentrierringe 14 und 15 ausschließlich durch die Breite des Tretlagergehäuses 2 vorgegeben, während die Länge der Kassettenhülse 13 so begrenzt ist, daß auch bei geringst vorkommendem Abstand der Hülsenzentrierringe 14 und 15 die Kassettenhülse 13 zwar allseitig fest umschlossen, jedoch axial anschlagfrei in ihrem Sitz an dem zweiten Hülsenzentrierring 15 sitzt.

Demnach befindet sich in montiertem Zustand das Stirnende 22 der Kassettenhülse 13 berührungsfrei vor dem bodenseitigen Ende der zugeordneten Aufnahmebohrung des Hülsenzentrierrings 15.

Der Ringboden 23 der Ausnehmung wird daher vom Stirnende 22 der Kassettenhülse 13 allenfalls kontaktiert, dies jedoch unter Ausschluß irgendwelcher axialen Druckkräfte.

In jedem Falle ist die gezeigte Version besser, wonach im montierten Zustand zwischen dem Stirnende 22 der Kassettenhülse 13 und dem Ringbogen 23 der Ausnehmung am zweiten Hülsenzentrierring 15 ein gewisser Abstand eingehalten ist.

Ferner zeigt Fig.1, daß die inneren Lagerlaufbahnen 6 bzw. 7 der Wälzkörperlager von angestauchten Schultern 24 bzw. 25 gebildet werden. Abweichend hiervon zeigt Fig.2, daß die inneren Lagerlaufbahnen 6 und 7 auch in das Material der Tretlagerachse 5 eingedreht sein können.

Beiden Ausführungsbeispielen ist jedoch zu eigen, daß die Wälzkörperlager als Schulterkugellager ausgebildet sind. Dies bietet den Vorteil, daß neben den radialen Lagerkräften auch axiale Kräfte zuverlässig abgefangen werden können während gleichzeitig das axiale Lagerspiel feinfühlig eingestellt werden kann. Zu diesem Zweck ist die Einschraubtiefe des zweiten Hülsenzentrierrings 15 geringer als die maximale Gewindelänge mit welcher dieser in das Tretlagergehäuse 2 eingeschraubt werden kann.

### Zur Funktion:

Die Lagerhülse 16 der ersten Tretlagerseite I wird in das offene Ende der Kassettenhülse 13 eingesteckt. Danach wird das dort befindliche Ende um die eingesteckte Lagerhülse 16 herumgebördelt, so daß diese fest gegen die innenendig befindliche Stufe 26 der Kassettenhülse 13 gehalten wird.

Anschließend wird der erste Hülsenzentrierring 14 über das freie Ende der vorgefertigten Kassettenhülse geschoben. Die Innenkontur des ersten Hülsenzentrierrings 14 sitzt eng auf der Außenkontur der Kassettenhülse 13 einschließlich der Kontur des umgebördelten Endes 18. Es entsteht auf diese Weise im Wälzkörperbereich der ersten Tretlagerseite ein innig ineinander gefügter Verbund aus Lagerhülse 16, Kassettenhülse 13 und erstem Hülsenzentrierring 14.

Bei den gezeigten Ausführungsbeispielen ist der Hüllkreis der Wälzkörper auf dieser Tretlagerseite I jedenfalls nicht größer als der kleinste Innendurchmesser der so vorgefertigten Kassettenhülse 13 mit Lagerhülse 16. Demnach kann nun der Wälzkörperkäfig eingeführt werden.

Anschließend kann die Tretlagerachse 5 eingesteckt werden, so daß das erste Wälzkörperlager 10 bereits seine Funktion aufnehmen kann.

Nun wird der zweite Hülsenzentrierring 15 ebenfalls mit seinem Wälzkörperlager 11 bestückt. Hierzu ist der Innendurchmesser des zweiten Hülsenzentrierrings 15 von außen nach innen zusammenlaufend bis auf den Hüllkreis, den die Wälzkörper benötigen, um auf dem dort befindlichen Lageraußenring 9 abzurollen.

Da der größte Außendurchmesser des zweiten Hülsenzentrierrings 15 in Bezug zum Hüllkreis der Wälzkörper größer oder mindestens gleich groß ist, läßt sich nun der zweite Hülsenzentrierring 15 einfach über das freie Ende der Kassettenhülse 13 stecken und sitzt dort bereits sicher, so daß nunmehr die beiden Hülsenzentrierringe 14,15 gegeneinander verschraubt werden können, bis sie mit ihren inneren Stirnflächen fest an den Stirnflächen des Tretlagergehäuses anliegen.

Da ferner die Kassettenhülse 13 axial starr ausgebildet ist, bedarf es zur Vermeidung von Mehrfachpassungen des Axialspiels 21 zwischen dem Stirnende 22 der Kassettenhülse 13 und dem Ringboden 23 der entsprechenden Ausnehmung am zweiten Hülsenzentrierring 15.

### Bezugszeichenliste:

- 1: Tretlageranordnung
- 2: Tretlagergehäuse
- 3: erstes Einschraubgewinde
- 4: zweites Einschraubgewinde
- 5: Tretlagerachse
- 6: erste innere Lagerlaufbahn
- 7: zweite innere Lagerlaufbahn
- 8: erster Lageraußenring
- 9: zweiter Lageraußenring
- 10: erstes Wälzkörperlager
- 11: zweites Wälzkörperlager
- 12: Tretlagerkassette
- 13: Kassettenhülse
- 14: erster Hülsenzentrierring
- 15: zweiter Hülsenzentrierring
- 16: Lagerhülse
- 17: äußeres Ende der Lagerhülse
- 18: umgebördeltes Ende der Kassettenhülse
- 19: Kunststoffteil
- 20: Stahlring
- 21: Axialspiel
- 22: Stirnende der Kassettenhülse
- 23: Ringboden der Ausnehmung
- 24: erste angestauchte Schulter
- 25: zweite angestauchte Schulter
- 26: Stufe
- I: erste Tretlagerseite
- II: zweite Tretlagerseite

## Patentansprüche

1. Tretlageranordnung (1) für das Tretlagergehäuse (2) eines Fahrradtretlagers mit einer Tretlagerachse (5), die endseitig innere Lagerlaufbahnen (6,7) von Wälzkörperlagern (10,11) trägt, dere Lageraußenringe (8,9) über eine vom Tretlagergehäuse (2) unabhängige Tretlagerkassette (12) verbunden sind, wobei die Tretlagerkassette (12) das Tretlager hülsenartig (13) umschließt und an ihren Enden mit ihrem Außenumfang in jeweils einem Hülsenzentrierring (14,15) sitzt, welcher über ein Außengewinde im Tretlagergehäuse (2) gehalten wird und wobei das Wälzkörperlager (10) der ersten Tretlagerseite (I) in einen Lageraußenring (8) eingebettet ist, welcher als Lagerhülse (16) endseitig an der Tretlagerkassette (12) sitzt, **dadurch gekennzeichnet, daß** die Kassettenhülse auf der ersten Tretlagerseite eine innenliegende Stufe (26) aufweist, gegen welche die Lagerhülse (16) axial festgehalten wird, und daß der Lageraußenring (9) des Wälzkörperlagers (11) der zweiten Tretlagerseite (II) am Boden der Innenbohrung des auf dieser Tretlagerseite liegenden Hülsenzentrierrings (15) sitzt.

2. Tretlageranordnung nach Anspruch 1, **dadurch gekennzeichnet, daß** der Lageraußenring (8) der ersten Tretlagerseite (I) außenendig in einer dort umgebördelten Lagerhülse (16) sitzt, welche in die Kassettenhülse (13) der Tretlagerkassette (12) eingesteckt ist.

3. Tretlageranordnung nach Anspruch 2, **dadurch gekennzeichnet, daß** der Hülsenzentrierring (14) der ersten Tretlagerseite (I) die Kassettenhülse (13) mitsamt der Lagerhülse (16) umschließt, und daß die Kassettenhülse (13) um die Lagerhülse (16) herumgebogen ist.

4. Tretlageranordnung nach einem der Ansprüche 1 bis 3, **dadurch gekennzeichnet, daß** auf der zweiten Tretlagerseite (II) der Hülsenzentrierring (15) von einem Kunststoffteil (19) und von einem Stahlring (20) gebildet wird, der in dem Kunststoffteil (19) sitzt.

5. Tretlageranordnung nach Anspruch 4, **dadurch gekennzeichnet, daß** der Stahlring (20) von dem Kunststoffteil (19) umspritzt ist.

6. Tretlageranordnung nach Anspruch 4, **dadurch gekennzeichnet, daß** der Stahlring (20) in das Kunststoffteil (19) eingeklebt ist.

7. Tretlageranordnung nach Anspruch 4, **dadurch gekennzeichnet, daß** der Stahlring (20) in das Kunststoffteil (19) eingeklemmt ist.

8. Tretlageranordnung nach einem der Ansprüche 1 bis 7, **dadurch gekennzeichnet, daß** der Hülsenzentrierring (15) der zweiten Tretlagerseite (II) im Bereich der fertigungstechnisch vorkommenden Axialabstände der Wälzkörperlager im montierten Zustand mit Axialspiel (21) vor dem Stirnende (22) der Kassettenhülse (13) endet.

9. Tretlageranordnung nach einem der Ansprüche 1 bis 8, **dadurch gekennzeichnet, daß** die inneren Lagerlaufbahnen (6,7) der Wälzkörperlager (10,11) von angestauchten Schultern (24,25) der Tretlagerachse (5) gebildet werden.

10. Tretlageranordnung nach einem der Ansprüche 1 bis 9, **dadurch gekennzeichnet, daß** die Wälzkörperlager (10,11) als Schulterkugellager ausgebildet sind.

## Claims

1. Pedal bearing arrangement (1) for the pedal bearing housing (2) of a bicycle pedal bearing having a pedal bearing axle (5) which has inner bearing tracks (6, 7) for roll body bearings (10, 11) at its ends, the outer bearing rings (8, 9) of which are connected by means of a pedal bearing casing (12) which is independent of the pedal bearing housing (2), wherein the pedal bearing casing (12) encloses the pedal bearing on the bushing side (13) and is positioned at its ends with its outer periphery in a respective bushing centring ring (14, 15) which is held by an external thread in the pedal bearing housing (2), and wherein the roll body bearing (10) of the first pedal bearing side (I) is embedded in an outer bearing ring (8) which is positioned on the end of the pedal bearing casing (12) as a bearing bushing (16), **characterised in that** the casing bushing has an internal step (26) on the first pedal bearing side, against which step the bearing bushing (16) is fixedly held axially, and that the outer bearing ring (9) of the roll body bearing (11) of the second pedal bearing side (II) is positioned at the bottom of the inner bore of the bushing centring ring (15) lying on this pedal bearing side.

2. Pedal bearing arrangement as claimed in claim 1, **characterised in that** the outer bearing ring (8) of the first pedal bearing side (I) is positioned at the outer end in a bearing bushing (16) which is flanged at that location and is inserted into the casing bushing (13) of the pedal bearing casing (12).

3. Pedal bearing arrangement as claimed in claim 2, **characterised in that** the bushing centring ring (14) of the first pedal bearing side (I) encloses the casing bushing (13) together with the bearing bushing (16), and that the casing bushing (13) is bent around the bearing bushing (16).

4. Pedal bearing arrangement as claimed in one of claims 1 to 3, **characterised in that** on the second pedal bearing side (II) the bushing centring ring (15) is formed by a synthetic material part (19) and by a steel ring (20) which is positioned inside the synthetic material part (19).

5. Pedal bearing arrangement as claimed in claim 4, **characterised in that** the steel ring (20) has the synthetic material part (19) injection moulded around it.

6. Pedal bearing arrangement as claimed in claim 4, **characterised in that** the steel ring (20) is stuck into the synthetic material part (19).

7. Pedal bearing arrangement as claimed in claim 4, **characterised in that** the steel ring (20) is force-fit into the synthetic material part (19).

8. Pedal bearing arrangement as claimed in one of claims 1 to 7, **characterised in that** in the mounted condition the bushing centring ring (15) of the second pedal bearing side (II) terminates with axial play (21) in front of the end-face end (22) of the casing bushing (13) in the region of the axial spacings of the roll body bearings, which are induced by manufacturing techniques.

9. Pedal bearing arrangement as claimed in one of claims 1 to 8, **characterised in that** the inner bearing tracks (6, 7) of the roll body bearings (10, 11) are produced by shoulders (24, 25) formed on the pedal bearing axle (5).

10. Pedal bearing arrangement according to one of claims 1 to 9, **characterised in that** the roll body bearings (10, 11) are formed as shoulder ball bearings.

## Revendications

1. Dispositif formant palier de pédalier (1) pour le boîtier (2) d'un pédalier de bicyclette, avec un axe (5) qui porte, du côté de ses extrémités, des voies de roulement intérieures (6, 7) de paliers à roulement (10, 11) dont les bagues extérieures (8, 9) sont reliées par une cassette de palier de pédalier (12) indépendante du boîtier (2), étant précisé que la cassette (12) entoure le palier de pédalier à la manière d'un manchon (13) et est logée à ses extrémités, avec sa périphérie extérieure, dans des bagues de centrage de manchon respectives (14, 15) qui sont fixées dans le boîtier de pédalier (2) par l'intermédiaire d'un filetage extérieur, et que le palier à roulement (10) du premier côté de palier (I) est encastré dans une bague de palier extérieure (8) qui est placée comme manchon (16), côté extrémité, contre la cassette de palier de pédalier (12), **caractérisé en ce que** le manchon formant cassette comporte, sur le premier côté du palier de pédalier, un épaulement intérieur (26) contre lequel le manchon de palier (16) est bloqué axialement, et **en ce que** la bague extérieure (9) du palier à roulement (11) du second côté de palier de pédalier (II) est placée au fond du perçage intérieur de la bague de centrage de manchon (15) située sur ce côté de palier de pédalier.

2. Dispositif formant palier de pédalier selon la revendication 1, **caractérisé en ce que** la bague extérieure (8) du premier côté de palier de pédalier (I) est placée, à son extrémité extérieure, dans un manchon de palier (16) qui est bridé à cet endroit et qui est introduit dans le manchon (13) de la cassette de palier de pédalier (12).

3. Dispositif formant palier de pédalier selon la revendication 2, **caractérisé en ce que** la bague de centrage de manchon (14) du premier côté de palier de pédalier (I) entoure le manchon de cassette (13) avec le manchon de palier (16), et **en ce que** le manchon de cassette (13) est replié sur le manchon de palier (16).

4. Dispositif formant palier de pédalier selon l'une des revendications 1 à 3, **caractérisé en ce que** sur le second côté de palier de pédalier (II), la bague de centrage de manchon (15) est définie par une pièce en matière plastique (19) et par une bague métallique (20) qui est placée dans celle-ci.

5. Dispositif formant palier de pédalier selon la revendication 4, **caractérisé en ce que** la bague métallique (20) est entourée par extrusion par la pièce en matière plastique (19).

6. Dispositif formant palier de pédalier selon la revendication 4, **caractérisé en ce que** la bague métallique (20) est collée dans la pièce en matière plastique (19).

7. Dispositif formant palier de pédalier selon la revendication 4, **caractérisé en ce que** la bague métallique (20) est serrée dans la pièce en matière plastique (19).

8. Dispositif formant palier de pédalier selon l'une des revendications 1 à 7, **caractérisé en ce que** la bague de centrage de manchon (15) du second côté de palier de pédalier (II), dans la zone des écartements axiaux des paliers à roulement dus à la technique de production, se termine en position montée avec un jeu axial (21) avant l'extrémité frontale (22) du manchon de cassette (13).

9. Dispositif formant palier de pédalier selon l'une des revendications 1 à 8, **caractérisé en ce que** les voies de roulement intérieures (6, 7) des paliers à roulement (10, 11) sont définies par des épaulements (24, 25) de l'axe de pédalier (5) formés par refoulement.

10. Dispositif formant palier de pédalier selon l'une des revendications 1 à 9, **caractérisé en ce que** les paliers à roulement (10, 11) sont conçus comme des roulements à billes et à épaulement.
